Europäisches Patentamt

European Patent Office

Office européen des brevets

(19)

(11) **EP 0 877 984 B1**

(12) **EUROPEAN PATENT SPECIFICATION**

(45) Date of publication and mention
of the grant of the patent:
**24.05.2000 Bulletin 2000/21**

(51) Int Cl.7: **G06F 15/80**

(86) International application number:
**PCT/DK97/00043**

(21) Application number: **97902155.7**

(22) Date of filing: **03.02.1997**

(87) International publication number:
**WO 97/30400 (21.08.1997 Gazette 1997/36)**

(54) **A METHOD OF PROCESSING DATA FLOWS IN A NEURAL NETWORK, AND A NEURAL NETWORK**

VERFAHREN ZUR VERARBEITUNG VON DATENSTRÖMEN IN EINEM NEURONALEN NETZWERK UND EIN NEURONALES NETZWERK

PROCEDE DE TRAITEMENT DE FLUX DE DONNEES DANS UN RESEAU NEURONAL, ET RESEAU NEURONAL

(84) Designated Contracting States:
**AT BE CH DE DK ES FI FR GB GR IE IT LI LU MC NL PT SE**

(30) Priority: **02.02.1996 DK 11196**

(43) Date of publication of application:
**18.11.1998 Bulletin 1998/47**

(73) Proprietor: **Coterill, Rodney Michael, John
3520 Farum (DK)**

(72) Inventor: **Coterill, Rodney Michael, John
3520 Farum (DK)**

(74) Representative: **Wittrup, Flemming et al
Hofman-Bang A/S
Hans Bekkevolds Allé 7
2900 Hellerup (DK)**

(56) References cited:
**DE-A- 19 504 664       US-A- 4 326 259
US-A- 5 253 329        US-A- 5 333 239
US-A- 5 479 575        US-A- 5 517 667**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a method of processing data flows in a neural network, comprising the steps of:

a) receiving a parameter representation from the environment in a plurality of input neurons

b) transferring a weighted parameter representation from the output of the input neurons to the input of an internal layer of neurons

c) transferring a weighted parameter representation from the output of the internal layer to the input of a plurality of output neurons, and simultaneously transferring a weighted parameter representation from the output of the internal layer to the input of a plurality of input neurons

d) feeding back a weighted parameter representation from the output of the output neurons after influence on the environment to the input of a plurality of input neurons.

The invention moreover relates to a neural network which has an internal sensor having a plurality of input neurons to receive a parameter representation from the environment, wherein the output of the external sensor is connected to an internal layer having a plurality of neurons, wherein the output of the internal layer is connected to the input of an external effector having a plurality of output neurons, and wherein a parameter representation of the influence of the output neurons on the environment is fed back to the input of a plurality of a input neurons.

Such a method and a neural network consisting of three types of neurons have previously been described in e.g. EP 0 529 682 A2, WO 95 24 684 A1.

Further, US patent No 5 253 329 shows a neural network in which recurrent connections give the overall circuit the ability to recognize temporal sequences in the input signals, due to prior training of the overall circuit. There is no mode of operation of the circuit shown in the US publication which involves the eksklusive activation of those recurrent connections, in the absence of input signals. The recurrent connections according to the invention serve a quite different purpose, namely to produce an internally-generated simulation of external output, this being stated as being equivalent to the generation of thoughts, cf. later.

These known neural networks are based on the classic understanding of the concept of consciousness, more particularly that consciousness and the associated muscles are affected by input from the five different human senses, i.e. taste, smell, vision, touch and hearing. The output may be a reflex, with direct coupling from input to output.

The present invention is based on another concept of consciousness, distinguishing between two forms of sensory input. These are called afferent signals and reafferent signals. The afferent signals are not caused by oneself. For example, the sound of an explosion will be an afferent signal since the sound reaches us without our doing anything.

The reafferent signals are caused by oneself. For example, the sense of touch is an example of a reafferent signal. Thus, one receives a signal e.g. through the fingers because of one's muscular movements. In other words, the world is explored through reafferent signals.

Consciousness is thus to be perceived as an interaction between brain, body and environment realized via the motor mechanism. Consequently, there are to types of basic cognitive processes, viz. thought and movement, both of which are subjected to the same controlling unit, a so-called master node.

A more thorough account of the above-mentioned theories can be found in the inventor's article entitled "On the unity of conscious experience", published by the Technical University of Denmark, Institute of Physics, Building 307, DK-2800 Lyngby, which was not made available to the public at the filing date of the present application.

Based on the above-mentioned theories, the object of the invention is to provide a method and a technical neural network which operate according to the principles of the master node theory, as mentioned above.

The object of the invention is achieved in that the parameter representation from the output of the internal layer of neurons, which is a master node, is corrected by the parameter representation from the result of the influence of the output neurons on the environment.

As a result, in the processing of data flows in the neural network an artificial consciousness is simulated because of an indirect coupling of the output neuron parameter representation to the master node.

As stated in claim 2, the method is expedient in that the correction is performed by an addition.

This provides an extremely suitable way of correcting the parameter representation, as this my expediently take place vectorially.

When the method is performed as stated in claim 3, only the parameter representation from the internal layer is fed back in the processing of signals in the neural network after learning.

As a result, the neural network will now operate according to its simulated consciousness and will thus not be dependent on influence on the environment.

As mentioned, the invention also relates to a neural network which is characterized in that the parameter representation from the output of the internal layer, which is a master node, is corrected by the parameter representation from the result of the influence of the output neurons on the environment.

This provides a technical neural network which has a built-in simulated consciousness.

Expedient embodiments of the invention are defined in claims 5-7.

The essential parts in connection with the invention are thus

a) generation of an output to the environment,

b) the internal workings in the neural network, including status evaluations, and

c) detection of the input from the environment.

The environment of the network is here understood to be all those physical objects and attributes of the immediate or remote surroundings of the neural network which can be detected by any or all of the detectors of the neural network, and all those physical objects and attributes of the immediate and remote environment of the neural network which can be influenced by any or all of the outputs of the neural network.

In a computer simulation of consciousness, the environment mentioned above will be a simulated environment, and the objects and attributes will be simulated objects and attributes. In a computer simulation of consciousness, the above-mentioned detection device of the neural network will be a simulated detection device. In a computer simulation of consciousness, the above-mentioned outputs of the neural network will be simulated outputs. The outputs include all physical processes whereby physical objects and attributes of the immediate or remote environment of the neural network or the computer can be influenced. These processes include all mechanical, sound/audio, thermal, electrical, magnetic, electromagnetic (including radiation in the entire electromagnetic spectrum) electrochemical, chemical, biochemical, biological (including molecular biological), optical, nuclear and sub-atomic particle processes, said processes acting individually or in any or all possible combinations.

The detection devices, the internal working and the status evaluation referred to above include the same processes as are mentioned in the description of the output.

Further, the status evaluator are monitors which, at any given time, evaluate the degree to which the needs and aims of the neural network or the computer are not realized or satisfied, as well as evaluate whether the degree of danger to the neural network can or cannot be avoided, the word danger being here taken to mean the same as the processes mentioned before.

The aims of the neural network are all the external things which are supplied to the neural network and are related to its functioning, said neural network being designed to accomplish tasks on its own behalf or on behalf of a person or optionally other computers. The needs of the neural network are all these things which are contained within or associated with the neural network itself.

As previously mentioned, the design of the artificial consciousness of the neural network is based on creating an efference copy and setting up an appropriate interplay between the efference copy and the reafference input, and evaluating the consequences for the interplay of the neural network. The provision of an efference copy and the setting up of an appropriate interplay between the efference copy and the reafference input together with the mechanism for the evaluation of the results of this interplay, and its significance for the aims and needs of the neural network including avoidance of danger, are essential aspects of the invention. Thus, the invention provides an evaluation mechanism which will essentially give the neural network some properties which are comparable or equivalent to human feelings and emotions.

Said network of the invention may be used in numerous connections. Examples include:

- conscious circuits in general

- games and videos

- interactive television games based on simulated consciousness software/hardware

- military applications

- educational programs

- simulation of personal friendship

-     translation programs

-     security equipment

-     industrial control

-     cognitive processes.

The invention will now be explained more fully below with reference to an embodiment shown in the drawing, in which

fig. 1 shows an explanatory diagram of how the neurons are designed,

fig. 2 shows a block diagram for the implementation of a neural network of the invention, while

figs. 3-8 show various working situations for the block diagram of fig. 2.

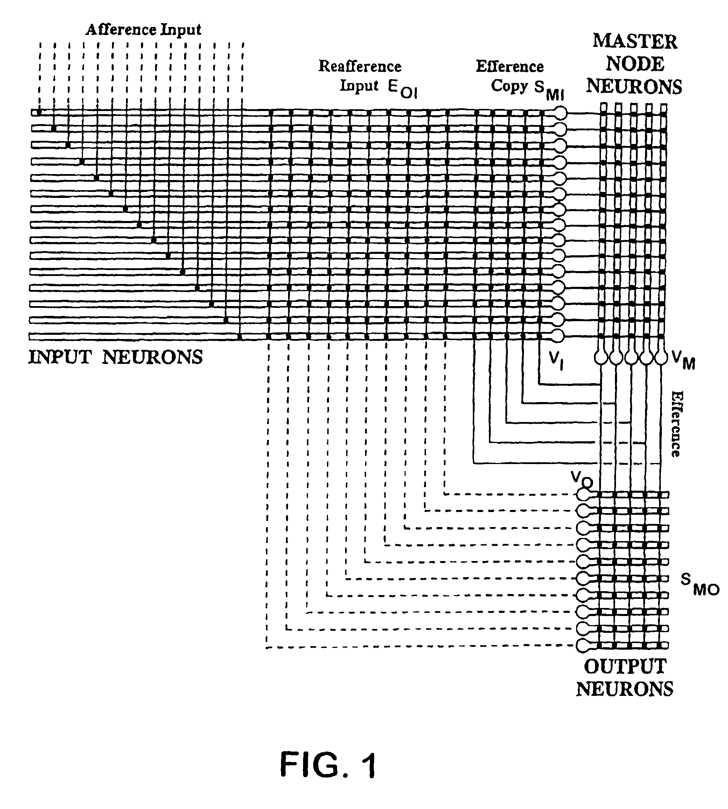

As appears from fig. 1, neurons consist of three groups, viz. input neurons, master node neurons and output neurons. The input neurons may e.g. select signals from an apparatus (designated afference input in fig. 1). Further, the input neurons can receive signals from the response from an apparatus whose signals have been processed in the neural network (designated reafference input in the drawing). Finally, the input neurons can directly receive signals fed back from the master node neurons (designated efference copy in the drawing).

The neuron network has a design that allows all the neurons to receive signals either from other neurons or directly from the environment via an apparatus or from both such sources.

A mathematical model will be set-up below to illustrate how the fundamental signal transfer between the neurons takes place.

In fig. 1, the vector for the input neurons is designated by $V_1$, while the connections may be called a matrix, which, as regards the input neurons, consists of two matrices $E_{OI}$ and $S_{MI}$. The matrix $E_{OI}$ illustrates the reafference route which corresponds to a weighted parameter representation of the vector of the output neurons after influence on the environment. Correspondingly, the matrix $S_{MI}$ indicates weighted data representations as a result of the value of the vector $V_M$ from the master node. The weight parameter representations of the master node neurons consist of the matrix $S_{IM}$ which receives the vector signal $V_I$ as the input signal, and emits, on its output, the vector signal $V_M$ to weighted representations $S_{MO}$ in the matrix associated with the output neurons.

In the example, it is assumed that there are 14 input neurons, 6 master node neurons and 10 output neurons. (The drawing, however, shows 15 input neurons and 5 master node neurons).

In the example, the individual elements of the matrix $S_{MO}$ are given initial values which are distributed uniformly in the interval 0.0 to 1.0. This represents the fact that the system has already developed links between the master node and the output. In contrast, $S_{IM}$ and $S_{MI}$ are all of the same value, viz. 0.5. This initial situation therefore corresponds to the case in which nothing has been learned about the environment. Finally, the matrix $E_{OI}$ represents elements which are not the same, in order to illustrate the situation in which the environment contains information.

The first illustration of the functions of the network will show the important case where the network explores its environment. The initial activity is seen in the master node, it having received activation from the internal activating system. For a given activity pattern expressed by the vector $V_M$ in the master node, the resulting activity pattern in the output will be given by

$$V_O = V_M * S_{MO}, \qquad (1)$$

where the symbol * indicates multiplication.

The master node also sends activities to the input side, but in this case it is a second sort of activity which reaches the receiving unit, viz. that which comes from the environment, in the form of an reafference input. The net activity arriving at the input on the master node is a consequence of the activity in the master node, and thus given by

$$V_I = V_M * S_{MI} + V_O * E_{OI} \qquad (2)$$

Finally, the input neurons will send signals to the master node, the activity thereby reaching the output on the master node being given by

$$V_M = V_I * S_{IM} \tag{3}$$

In the specific implementation described below, the neurons have learned about their environment by changing the sizes of the elements in the $S_{MI}$ and $S_{IM}$ synaptic connection matrices. The rule for these changes in synaptic efficiencies (also commonly known as synaptic weights) is that any synapse joining two neurons that are simultaneously both active will have its efficacy increased, whereas synapses joining a pair of neurons in which only one of these is active will have its efficacy slightly decreased. These two cases are governed by the equations

$$\Delta S_{IM}(i,j) = \varepsilon * (1 - S_{IM}) (i,j)) \tag{4}$$

and

$$\Delta S_{IM}(i,j) = 0.5 * \varepsilon * (S_{IM}(i,j) \tag{5}$$

In these equations, the symbol $\Delta$ indicates the amount of change in the efficacy of the synaptic connection between the input neuron number I and the master node neuron number J. The quantity $\varepsilon$ expresses the degree of learning under a given set of circumstances, and in the present example is assigned the value 0.01. The correction factor 0.5 which appears in equation (5) is necessary because there is twice as great a probability of a mismatch between neuronal activities (i.e. both +- and -+) as there is of a match (i.e. ++).

In this example the network functions with the following initial matrices having the following elements, all those having a value different from O having been determined by a random number generator.

| $S_{IM}$ | | | | | | | | | | | | | |
|---|---|---|---|---|---|---|---|---|---|---|---|---|---|
| Input to master (6 groups of 14) | | | | | | | | | | | | | |
| 0.50 | 0.50 | 0.50 | 0.50 | 0.50 | 0.50 | 0.50 | 0.50 | 0.50 | 0.50 | 0.50 | 0.50 | 0.50 | 0.50 |
| 0.50 | 0.50 | 0.50 | 0.50 | 0.50 | 0.50 | 0.50 | 0.50 | 0.50 | 0.50 | 0.50 | 0.50 | 0.50 | 0.50 |
| 0.50 | 0.50 | 0.50 | 0.50 | 0.50 | 0.50 | 0.50 | 0.50 | 0.50 | 0.50 | 0.50 | 0.50 | 0.50 | 0.50 |
| 0.50 | 0.50 | 0.50 | 0.50 | 0.50 | 0.50 | 0.50 | 0.50 | 0.50 | 0.50 | 0.50 | 0.50 | 0.50 | 0.50 |
| 0.50 | 0.50 | 0.50 | 0.50 | 0.50 | 0.50 | 0.50 | 0.50 | 0.50 | 0.50 | 0.50 | 0.50 | 0.50 | 0.50 |
| 0.50 | 0.50 | 0.50 | 0.50 | 0.50 | 0.50 | 0.50 | 0.50 | 0.50 | 0.50 | 0.50 | 0.50 | 0.50 | 0.50 |

| S_MO | | | | | |
|------|------|------|------|------|------|
| Master to output (10 groups of 6) | | | | | |
| 0.30 | 0.29 | 0.54 | 0.67 | 0.68 | 0.21 |
| 0.46 | 0.50 | 0.32 | 0.05 | 0.35 | 0.20 |
| 0.26 | 0.33 | 0.32 | 0.09 | 0.98 | 0.18 |
| 0.67 | 0.00 | 0.37 | 0.17 | 0.49 | 0.88 |
| 0.18 | 0.69 | 0.97 | 0.11 | 0.76 | 0.96 |
| 0.60 | 0.13 | 0.67 | 0.87 | 0.06 | 0.94 |
| 0.35 | 0.46 | 0.35 | 0.58 | 0.59 | 0.71 |
| 0.19 | 0.86 | 0.31 | 0.61 | 0.24 | 0.18 |
| 0.03 | 0.08 | 0.55 | 0.77 | 0.64 | 0.57 |
| 0.80 | 0.81 | 0.43 | 0.10 | 0.96 | 0.48 |

| S_MI | | | | | |
|------|------|------|------|------|------|
| Master to input (14 groups of 6) | | | | | |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |

| S_MI | | | | | |
|------|------|------|------|------|------|
| Master to input (14 groups of 6) | | | | | |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |
| 0.50 | 0.50 | 0.50 | 0.50 | 0.50 | 0.50 |

| E_OI | | | | | | | | | |
|------|------|------|------|------|------|------|------|------|------|
| Output to output (14 groups of 10) | | | | | | | | | |
| 0.16 | 0.12 | 0.87 | 0.65 | 0.55 | 0.96 | 0.96 | 0.69 | 0.88 | 0.02 |
| 0.37 | 0.20 | 0.02 | 0.99 | 0.87 | 0.82 | 0.05 | 0.33 | 0.23 | 0.12 |
| 0.29 | 0.45 | 0.57 | 0.23 | 0.01 | 0.71 | 0.48 | 0.41 | 0.05 | 0.02 |
| 0.69 | 0.94 | 0.90 | 0.77 | 0.40 | 0.28 | 0.19 | 0.21 | 0.26 | 0.95 |
| 0.90 | 0.66 | 0.98 | 0.52 | 0.47 | 0.07 | 0.98 | 0.73 | 0.41 | 0.19 |
| 0.91 | 0.05 | 0.12 | 0.61 | 0.18 | 0.51 | 0.18 | 0.53 | 0.67 | 0.74 |
| 0.65 | 0.08 | 0.98 | 0.68 | 0.28 | 0.27 | 0.70 | 0.26 | 0.13 | 0.71 |
| 0.66 | 0.31 | 0.38 | 0.89 | 0.96 | 0.89 | 0.15 | 0.89 | 0.65 | 0.47 |
| 0.12 | 0.36 | 1.00 | 0.05 | 0.04 | 0.03 | 0.95 | 0.82 | 0.47 | 0.79 |
| 0.27 | 0.41 | 0.63 | 0.77 | 0.79 | 0.89 | 0.84 | 0.24 | 0.29 | 0.41 |
| 0.41 | 0.25 | 0.79 | 0.48 | 0.68 | 0.47 | 0.47 | 0.53 | 0.70 | 0.70 |

(continued)

| $E_{OI}$ | | | | | | | | | |
|---|---|---|---|---|---|---|---|---|---|
| Output to output (14 groups of 10) | | | | | | | | | |
| 0.43 | 0.92 | 0.33 | 0.14 | 0.61 | 0.45 | 0.62 | 0.96 | 0.95 | 0.64 |
| 0.65 | 0.90 | 0.64 | 0.58 | 0.48 | 0.36 | 0.51 | 0.34 | 0.63 | 0.12 |
| 0.17 | 0.63 | 0.69 | 0.00 | 0.21 | 0.83 | 0.72 | 0.98 | 0.92 | 0.13 |

In order to permit the neural network to learn about its environment, every possible activity combination in the master node was generated in turn, for situations in which just half (i.e. three) of the six neurons were active at any instant. There are 20 different ways in which three neurons out of a total of six can be active: 111000, 110100, 110010, and so on until 000111. These different activity patterns in the master node generate the activity pattern in the output unit, according to equation (1) above. But because there are many more possible activity patterns in a set of ten neurons than there are in a set of six, it is clear that not all possible output patterns will be generated by the above-mentioned master node activity.

As discussed previously, the activity pattern generated in the input unit will be a consequence both of direct activation via the efference copy route and of indirect activation via the reafference route (see equation (2) above). Moreover, since there are fourteen input neurons. the possible variety of input patterns is even greater than it is for the output on the master node unit. All possible patterns will therefore not be observed. In the following, activation of all possible master node activation sequences, together with the resulting activity patterns in the other units, will be listed. Each group of three rows represents the sequence $V_M$, $V_O$ and $V_I$. One sees that there are few repeats in the $V_I$ patterns, as would be expected statistically, while if there was a larger number of neurons in each unit, such redundancy would rapidly diminish. In general, the simulated unit discriminates quite well between the various features from the environment.

111000
0100110101
01010001011101

110100
1000011101
10001101100101

110010
0110101001
00011010111100

110001
0001111001
11010011011000

101100
1000011011
10000101011101

101010
1011100001
00011111011000

101001
0001111001
11010011011000

011100
1000110110
11000101001101

011010
1010100101
00011011101100

011001

```
0000111101
10000001111101

100110
1000011011
10000101011101

100101
0001011011
10000101011101

100011
0001111001
11010011011000

010110
1000101101
00001011111100

010101
0000111110
10001001011101

010011
0011101001
10011011011000

001110
1000111010
10001001011101

001101
0001111010
11000001011101

001011
```

```
0001110011
11000101011100
```

```
000111
1000111010
10001001011101
```

The overall network was now permitted to learn, according to equation (4) and equation (5) above, and the resulting changes to the elements in the $S_{IM}$ and $S_{MI}$ are shown in the following tables.

| $S_{IM}$ | | | | | | | | | | | | | |
|---|---|---|---|---|---|---|---|---|---|---|---|---|---|
| Input to master (6 groups of 14) | | | | | | | | | | | | | |
| 0.51 | 0.48 | 0.48 | 0.50 | 0.49 | 0.50 | 0.49 | 0.48 | 0.53 | 0.48 | 0.52 | 0.52 | 0.51 | 0.47 |
| 0.52 | 0.49 | 0.48 | 0.50 | 0.47 | 0.51 | 0.49 | 0.50 | 0.52 | 0.49 | 0.52 | 0.50 | 0.51 | 0.48 |
| 0.51 | 0.50 | 0.48 | 0.51 | 0.50 | 0.49 | 0.51 | 0.51 | 0.49 | 0.50 | 0.50 | 0.52 | 0.50 | 0.47 |
| 0.51 | 0.50 | 0.48 | 0.46 | 0.48 | 0.49 | 0.48 | 0.51 | 0.50 | 0.49 | 0.52 | 0.49 | 0.49 | 0.50 |
| 0.51 | 0.47 | 0.48 | 0.48 | 0.51 | 0.51 | 0.50 | 0.50 | 0.51 | 0.50 | 0.51 | 0.50 | 0.49 | 0.49 |
| 0.50 | 0.48 | 0.48 | 0.49 | 0.48 | 0.49 | 0.51 | 0.51 | 0.50 | 0.49 | 0.51 | 0.50 | 0.49 | 0.49 |

| $S_{MI}$ | | | | | |
|---|---|---|---|---|---|
| Master to input (14 groups of 6) | | | | | |
| 0.51 | 0.52 | 0.51 | 0.51 | 0.51 | 0.50 |
| 0.48 | 0.49 | 0.50 | 0.50 | 0.47 | 0.48 |
| 0.48 | 0.48 | 0.48 | 0.48 | 0.48 | 0.48 |
| 0.50 | 0.50 | 0.51 | 0.46 | 0.48 | 0.49 |
| 0.49 | 0.47 | 0.50 | 0.48 | 0.51 | 0.48 |
| 0.50 | 0.51 | 0.49 | 0.49 | 0.51 | 0.49 |
| 0.49 | 0.49 | 0.51 | 0.48 | 0.50 | 0.51 |
| 0.48 | 0.50 | 0.51 | 0.51 | 0.50 | 0.51 |
| 0.53 | 0.52 | 0.49 | 0.50 | 0.51 | 0.50 |
| 0.48 | 0.49 | 0.50 | 0.49 | 0.50 | 0.49 |
| 0.52 | 0.52 | 0.50 | 0.52 | 0.51 | 0.51 |
| 0.52 | 0.50 | 0.52 | 0.49 | 0.50 | 0.50 |

| $S_{MI}$ | | | | | |
|---|---|---|---|---|---|
| Master to input (14 groups of 6) | | | | | |
| 0.51 | 0.51 | 0.50 | 0.49 | 0.49 | 0.49 |
| 0.47 | 0.48 | 0.47 | 0.50 | 0.49 | 0.49 |

The other matrices naturally remain unchanged. In order to demonstrate how the trained network would now response to exafference, which means arrival at the input neurons of the signals which have not been provoked by the neural network's own probing of the environment, the following steps may be taken. The net reafferent signals arriving at each of the 14 input neurons, for a given activity pattern in the master node, were calculated and stored.

For the sake of illustration, the master node activity pattern was taken to be the first of the 20 patterns discussed previously. viz.

$$111000$$

The 14 input signals which this master node pattern gave rise to were as follows

total sensory input to each input neuron 2.34 2.35 1.61 2.78 2.13 2.00 1.59 3.51 2.05 2.74 2.64 3.59 2.20 2.77

If the same 14 signals were now used as exafference input, i.e. input without prior activity in the master node, the activity then generated in the master node would (using equation (3) above) would be calculated to be 111000.

This shows that the activity generated in the master node by purely afferent input signals would be precisely the same as if the master node activity had generated the equivalent reafference signals. In other words, the trained network will respond by internally simulating activity related to its own output.

Finally, a few points should be discussed regarding the function of the simulated network. First, it should be noted that the efference copy signals transmitted from the master node to the input unit, during learning, will have an even influence on the 14 input neurons, because all elements in $S_{MI}$ are equal. If further learning takes place thereafter, this uniformity will not strictly hold. However, it must be kept in mind that the network used here for illustration is very small, and the activity level is extremely high (i.e. half of all the neurons are active in any given pattern). In practice, the network will be much larger, and the fraction of activity neurons in any given pattern will be considerably less. The approximate uniformity of the efference copy signals would thereby be maintained.

Second. in this simple illustration, the synaptic matrices $S_{MI}$ and $S_{IM}$ are symmetrical. This is the case because the input and the master node unit are simple (vectorial) sets of neurons. If, instead, either or both of these units were composite, i.e. composed of many different distinct and independent sets of neurons, this reciprocal symmetry would no longer be observed.

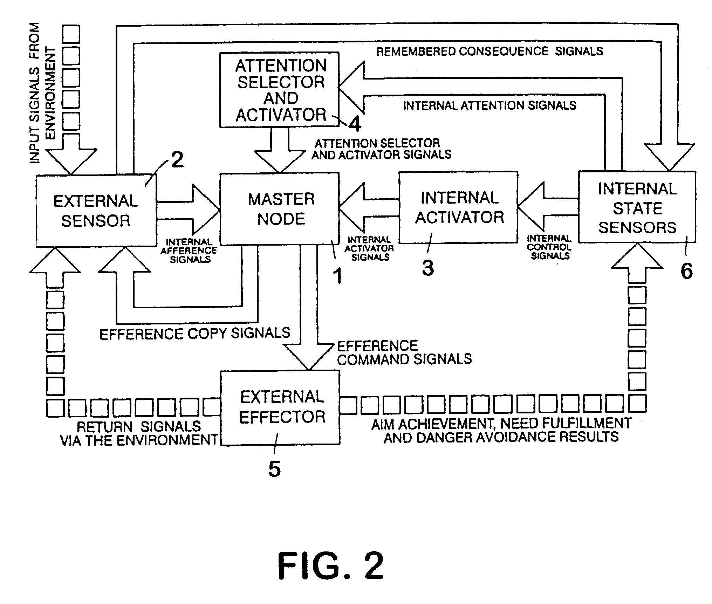

Fig. 2 shows a block diagram which may be used in the implementation of the invention. As will be seen, the circuit consists of a master node 1 which is connected to an external sensor 2, an internal activator 3, an external effector 5, a selector and activator 4, as well as, via the selector and activator 4, connected to an internal state sensor 6, which is additionally connected to the internal activator 3.

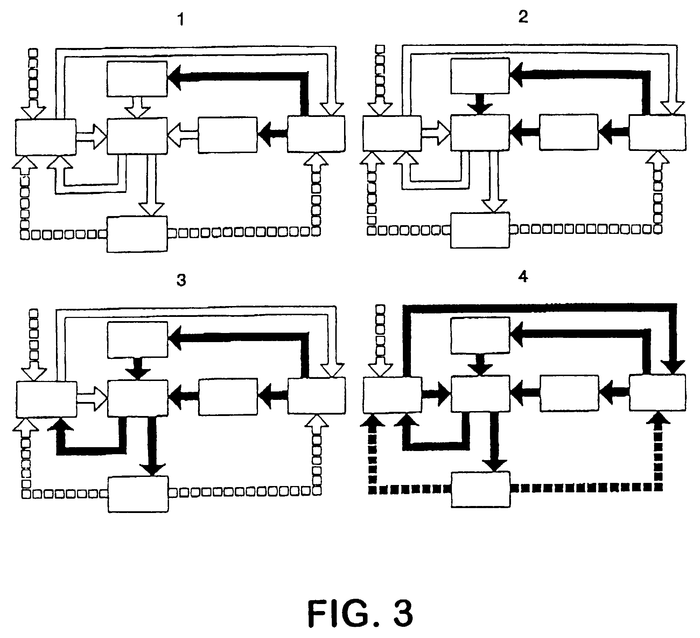

The manner in which this circuit can operate is shown in figs. 3-8. where fig. 3 illustrates that an internal sensor in the neural network responds to an internally motivated exploration of the environment. In this embodiment, the internal state sensor detects that the apparatus has developed aims or needs which initiate a series of events that lead to activation of the external effector. This enables the circuit to probe the environment, and the interplay between the efference copy signals and the reafferent signals produces consciousness. The consequences of the external probing of the circuit for the achievement of its aims, for the fulfilment of its needs, and for the avoidance of danger are fed back to the internal sensor unit. Memories of these events are simultaneously stored in the synapses associated with connections between the external sensor and the internal state sensor unit. These are used for predicting the probable consequences of future input signals.

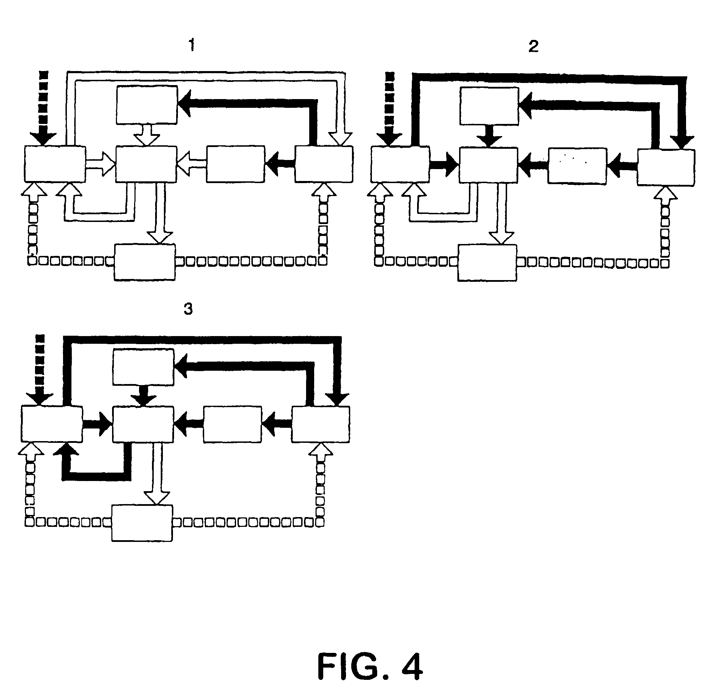

Fig. 4 shows a mode of operation with internally motivated perception of the input. In this mode of operation, the internal state sensors have already activated the system when the input occurs, and this enables the system to perceive the input and selectively pay attention to it, even though there is no overt response from the input.

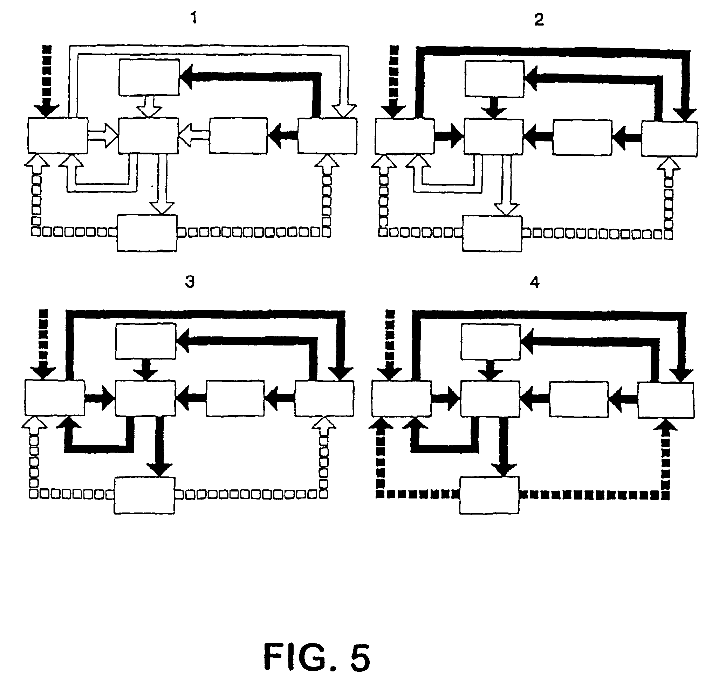

Fig. 5 shows the mode of operation for an internally motivated response from the input. This mode is similar to the mode in fig. 4, but in this case the level of motivation is sufficiently high that an actual response is elicited.

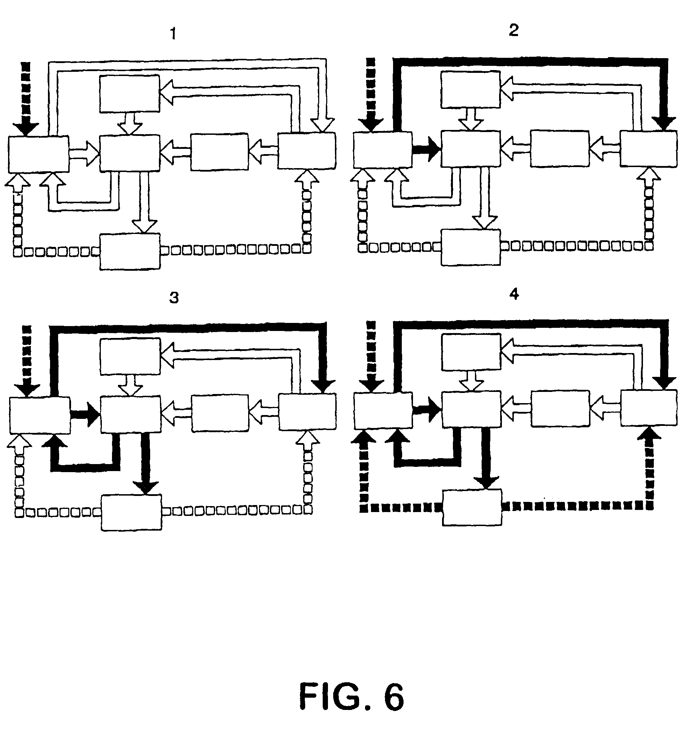

Fig. 6 shows a mode where the circuit operates with passive reflex response. In the absence of internal motivation, the arrival of an input signal may lead to a reflex response, even though the input is not actively attentive to this.

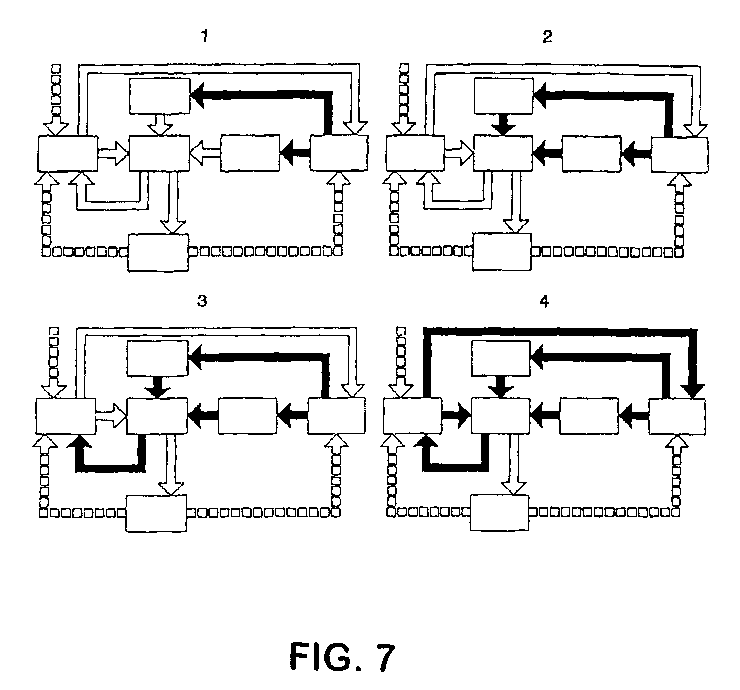

Fig. 7 shows a mode of internally motivated internal simulation of response (thought). This mode is essentially the opposite of the mode in fig. 6. The internal state sensor provokes the master node into an internal simulation of the outcome of a particular course of actions by inducing the master note to set up circulating signals which pass through the loop jointly formed by the efference copy and the afference routes. This also generates action in the route from the remembered consequence signals, and this can lead to adjustments in the synaptic contacts involved in the last-mentioned route. The system thus simulates actions and evaluates their consequences, without doing anything about them. This is thinking. (It is possible that this particular mode of functioning has aspects in common with the process of dreaming in the human).

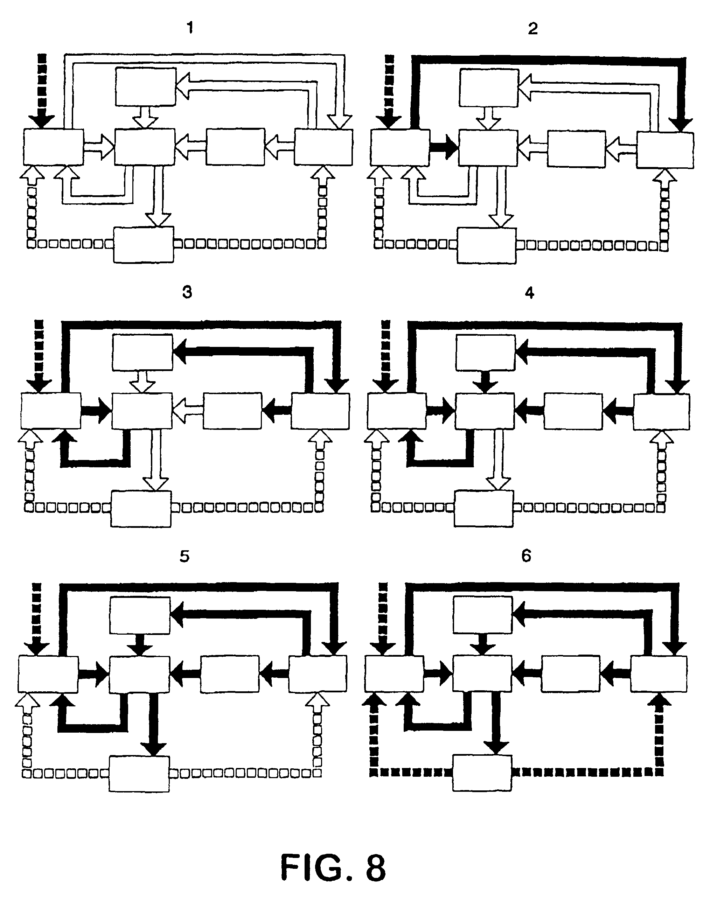

Finally, fig. 8 shows a mode of operation with externally driven arousal and response. In this final example, the machine is initially not motivated, but the expected consequences of the input provoke the system into action, and the circuit will then function in a manner analogous to that seen in fig. 5, with all the feedback routes active, and with selective attention being paid to the input.

**Claims**

1. A method of processing signals of data flows in a neural network comprising the steps of:

a. receiving an afference signal from the environment in an input network of input neurons forming an external sensor (2) for generating an input signal with parameter representation $V_I$;

b. creating an initial activity signal in an internal activation means (3);

c. supplying said initial activity signal to an internal network of internal neurons forming a master node (1) and having a weight matrix $S_{IM}$ corresponding to the weights of the interconnects of the neurons of the internal network for generating in response thereof an efference signal with parameter representation $V_M$;

d. supplying an efference signal with parameter representation $V_M$ to an output network of output neurons forming an external effector (5) and having a weight matrix $S_{MO}$ corresponding to the weights on the interconnects of the neurons of the output network for generating an output signal with parameter representation $V_O = V_M \times S_{MO}$;

e. simultaneously supplying an efference copy signal with parameter representation $V_M$ to said input network, said input network having a first weight matrix $S_{MI}$ corresponding to the weights of the interconnects of first neurons of the input network for generating a first input signal with parameter representation $V_M \times S_{MI}$ and supplying said first input signal to the internal network;

f. changing the values of the weight matrix $S_{IM}$ and the first weight matrix $S_{MI}$ during a training phase so as to learn from the environment,

characterised by:

g. also supplying to said input network the output signal with parameter representation $V_O = V_M \times S_{MO}$, said input network therefor having a second weight matrix $E_{OI}$ corresponding to the weights of interconnects of second neurons of the input network for generating a second input signal with parameter representation $V_O \times E_{OI}$ for the internal network which represents the result of the influence of the output signal of the output network on the environment;

h. correcting in said input network the first input signal with parameter representation $V_M \times S_{MI}$ with the second input signal with parameter representation $V_O \times E_{OI}$ so as to create the input signal with parameter representation $V_I$;

i. supplying to said internal network said input signal with parameter representation $V_I$ for generating an efference signal with parameter representation $V_M = V_I \times S_{IM}$.

2. A method according to claim 1, **characterized** in that the correction is performed by an addition.

3. A method according to claim 1 or 2, **characterized** in that only the parameter representation of the signal from the internal network is fed back in the processing of signals in the neural network after learning.

4. A neural network for processing signals of data flows comprising:

a. an input network of input neurons forming an external sensor (2) for receiving an afference signal from the environment and for generating an input signal with parameter representation $V_I$;

b. internal activation means (3) for creating an initial activity signal;

c. an internal network of internal neurons forming a master node (1) and having a weight matrix $S_{IM}$ corresponding to the weights of the interconnects of the neurons of the internal network for receiving said initial activity signal and in response thereof for generating an efference signal with parameter representation $V_M$;

d. an output network of output neurons forming an external effector (5) and having a weight matrix $S_{MO}$ corresponding to the weights on the interconnects of the neurons of the output network for receiving said efference signal with parameter represetation $V_M$ and for generating an output signal with parameter representation $V_O = V_M \times S_{MO}$;

e. means for simultaneously supplying an efference copy signal with parameter representation $V_M$ to said input network, said input network having a first weight matrix $S_{MI}$ corresponding to the weights of the interconnects of first neurons of the input network for generating a first input signal with parameter representation $V_M \times S_{MI}$ and for supplying said first input signal to the internal network;

f. means for changing the values of the weight matrix $S_{IM}$ and the first weight matrix $S_{MI}$ during a training phase so as to learn from the environment;

the network being characterised by:

g. means for supplying the output signal with parameter representation $V_O = V_M \times S_{MO}$, to said input network which therefor has a second weight matrix $E_{OI}$ corresponding to the weights of interconnects of second neurons of the input network for generating a second input signal with parameter representation $V_O \times E_{OI}$ for the internal network, said second input signal representing the result of the influence of the output signal of the output network on the environment;

h. means in said input network for correcting the first input signal with parameter representation $V_M \times S_{MI}$ with the second input signal with parameter representation $V_O \times E_{OI}$ so as to create the input signal with parameter representation $V_I$;

i. wherein said internal network receives said input signal with parameter representation $V_I$ for generating an efference signal with parameter representation $V_M = V_I \times S_{IM}$.

5. A neural network according to claim 4, **characterized** in that the correction consists in an addition.

6. A neural network according to claim 4 or 5, **characterized** in that the master node additionally has an input to receive output signals from an internal activator whose input is connected to the outputs from a sensor unit which receives signals representing deviations from the optimum states of the neural network and signals from the output of the external sensor.

7. A neural network according to claims 4-6, **characterized** in that the internal activator has an output which is connected to the input of a selector and activator which has an output connected to the master node.

**Patentansprüche**

1. Verfahren zum Verarbeiten von Signalen von Datenströmen in einem neuronalen Netz, wobei das Verfahren folgende Schritte umfaßt:

a) Empfangen eines Afferenzsignals aus der Umwelt in einem Eingabenetz aus Eingabeneuronen, die einen externen Sensor (2) bilden, um ein Eingabesignal mit einer Parameterwiedergabe $V_I$ zu erzeugen,

b) Erzeugen eines Initialaktivitätssignals in einer internen Aktivierungseinrichtung (3),

c) Ausgeben des Initialaktivitätssignals an ein internes Netz aus internen Neuronen, die einen Masterknoten (1) bilden und eine Gewichtsmatrix $S_{IM}$ aufweisen, welche den Gewichten der Verbindungen der Neuronen des internen Netzes entspricht, um in Reaktion darauf ein Efferenzsignal mit einer Parameterwiedergabe $V_M$ zu bilden,

d) Ausgeben des Efferenzsignals mit der Parameterwiedergabe $V_M$ an ein Ausgabenetz aus Ausgabeneuronen, die einen externen Effektor (5) bilden und eine Gewichtsmatrix $S_{MO}$ aufweisen, welche den Gewichten der Verbindungen der Neuronen des Ausgabenetzes entspricht, um ein Ausgabesignal mit einer Parameterwiedergabe $V_O = V_M \times S_{MO}$ zu erzeugen,

e) gleichzeitiges Ausgeben eines Efferenzkopiesignals mit einer Parameterwiedergabe $V_M$ an das Eingabenetz, wobei das Eingabenetz eine erste Gewichtsmatrix $S_{MI}$ aufweist, welche den Gewichten der Verbindungen der ersten Neuronen des Eingabenetzes entspricht, um ein erstes Eingabesignal mit einer Parameterwiedergabe $V_M \times S_{MI}$ zu bilden und das erste Eingabesignal an das interne Netz auszugeben,

f) Ändern der Werte der Gewichtsmatrix $S_{IM}$ und der ersten Gewichtsmatrix $S_{MI}$ während einer Lernphase, um aus der Umwelt zu lernen,

gekennzeichnet durch

g) Ausgeben des Ausgabesignals mit der Parameterwiedergabe $V_O = V_M \times S_{MO}$ auch an das Eingabenetz, so daß das Eingabenetz eine zweite Gewichtsmatrix $E_{OI}$ aufweist, welche den Gewichten der Verbindungen von zweiten Neuronen des Eingabenetzes entspricht, um ein zweites Eingabesignal mit einer Parameterwiedergabe $V_O \times E_{OI}$ für das interne Netz zu erzeugen, welches das Ergebnis des Einflusses des Ausgabesignals des Ausgabenetzes auf die Umwelt wiedergibt,

h) Korrigieren des ersten Eingabesignals mit der Parameterwiedergabe $V_M \times S_{MI}$ in dem Eingabenetz durch das zweite Eingabesignal mit der Parameterwiedergabe $V_O \times E_{OI}$. um das Eingabesignal mit der Parameterwiedergabe $V_I$ zu erzeugen,

i) Ausgeben des Eingabesignals mit der Parameterwiedergabe $V_I$ an das interne Netz, um ein Efferenzsignal mit der Parameterwiedergabe $V_M = V_I \times S_{IM}$ zu erzeugen.

2. Verfahren nach Anspruch 1, dadurch gekennzeichnet, daß die Korrektur durch eine Addition durchgeführt wird.

3. Verfahren nach Anspruch 1 oder 2, dadurch gekennzeichnet, daß nur die Parameterwiedergabe des Signals aus dem internen Netz bei der Verarbeitung der Signale in dem neuronalen Netz nach dem Lernen rückgekoppelt wird.

**4.** Neuronales Netz zum Verarbeiten von Signalen von Datenströmen mit:

a) einem Eingabenetz aus Eingabeneuronen, die einen externen Sensor (2) bilden, um ein Afferenzsignal aus der Umwelt zu empfangen und um ein Eingabesignal mit einer Parameterwiedergabe $V_I$ zu erzeugen,

b) einer internen Aktivierungseinrichtung (3) zum Erzeugen eines Initialaktivitätssignals,

c) einem internen Netz aus internen Neuronen, die einen Masterknoten (1) bilden und eine Gewichtsmatrix $S_{IM}$ aufweisen, welche den Gewichten der Verbindungen der Neuronen des internen Netzes entspricht, um das Initialaktivitätssignal zu empfangen und in Reaktion darauf ein Efferenzsignal mit einer Parameterwiedergabe $V_M$ zu bilden,

d) einem Ausgabenetz aus Ausgabeneuronen, die einen externen Effektor (5) bilden und eine Gewichtsmatrix $S_{MO}$ aufweisen, welche den Gewichten der Verbindungen der Neuronen des Ausgabenetzes entspricht, um das Efferenzsignal mit der Parameterwiedergabe $V_M$ zu empfangen um ein Ausgabesignal mit einer Parameterwiedergabe $V_O = V_M \times S_{MO}$ zu erzeugen,

e) einer Einrichtung zum gleichzeitigen Ausgeben eines Efferenzkopiesignals mit einer Parameterwiedergabe $V_M$ an das Eingabenetz, wobei das Eingabenetz eine erste Gewichtsmatrix $S_{MI}$ aufweist, welche den Gewichten der Verbindungen der ersten Neuronen des Eingabenetzes entspricht, um ein erstes Eingabesignal mit einer Parameterwiedergabe $V_M \times S_{MI}$ zu bilden und das erste Eingabesignal an das interne Netz auszugeben,

f) einer Einrichtung zum Ändern der Werte der Gewichtsmatrix $S_{IM}$ und der ersten Gewichtsmatrix $S_{MI}$ während einer Lernphase, um aus der Umwelt zu lernen,

gekennzeichnet durch

g) eine Einrichtung zum Ausgeben des Ausgabesignals mit der Parameterwiedergabe $V_O = V_M \times S_{MO}$ an das Eingabenetz, so daß das Eingabenetz eine zweite Gewichtsmatrix $E_{OI}$ aufweist, welche den Gewichten der Verbindungen von zweiten Neuronen des Eingabenetzes entspricht, um ein zweites Eingabesignal mit einer Parameterwiedergabe $V_O \times E_{OI}$ für das interne Netz zu erzeugen, wobei das zweite Eingabesignal das Ergebnis des Einflusses des Ausgabesignals des Ausgabenetzes auf die Umwelt wiedergibt,

h) eine Einrichtung zum Korrigieren des ersten Eingabesignals mit der Parameterwiedergabe $V_M \times S_{MI}$ in dem Eingabenetz durch das zweite Eingabesignal mit der Parameterwiedergabe $V_O \times E_{OI}$, um das Eingabesignal mit der Parameterwiedergabe $V_I$ zu erzeugen,

i) wobei das interne Netz das Eingabesignal mit der Parameterwiedergabe $V_I$ empfängt, um ein Efferenzsignal mit der Parameterwiedergabe $V_M = V_I \times S_{IM}$ zu erzeugen.

**5.** Neuronales Netz nach Anspruch 4, dadurch gekennzeichnet, daß die Korrektur in einer Addition besteht.

**6.** Neuronales Netz nach Anspruch 4 oder 5, dadurch gekennzeichnet, daß der Masterknoten zusätzlich einen Eingang zum Empfangen von Ausgabesignalen aus einem internen Aktivierer aufweist, dessen Eingang mit den Ausgängen einer Sensoreinheit verbunden ist, die Signale, welche Abweichungen von den optimalen Zuständen des neuronalen Netzes wiedergeben, sowie Signale aus dem Ausgang des externen Sensors empfängt.

**7.** Neuronales Netz nach wenigstens einem der Ansprüche 4 bis 6, dadurch gekennzeichnet, daß der interne Aktivierer einen Ausgang aufweist, der mit dem Eingang eines Selektors und Aktivierers verbunden ist, der einen mit dem Masterknoten verbundenen Ausgang aufweist.

**Revendications**

**1.** Procédé de traitement de signaux de flux de données dans un réseau neuronal, comprenant les étapes consistant à :

a) recevoir un signal d'afférence provenant de l'environnement dans un réseau d'entrée de neurones d'entrée formant un capteur externe (2) pour générer un signal d'entrée avec la représentation de paramètre $V_I$;

b) créer un signal d'activité initial dans des moyens d'activation internes (3);

c) fournir ledit signal d'activité initial à un réseau interne de neurones internes formant un noeud principal (1) et comportant une matrice de pondération SIM correspondant aux pondérations des interconnexions des neurones du réseau interne pour générer en réponse à celui-ci un signal d'efférence avec la représentation de paramètre $V_M$;

d) fournir un signal d'efférence avec la représentation de paramètre $V_M$ à un réseau de sortie de neurones de sortie formant un effecteur externe (5) et comportant une matrice de pondération $S_{MO}$ correspondant aux pondérations appliquées aux interconnexions des neurones du réseau de sortie pour générer un signal de sortie avec la représentation de paramètre $V_O = V_M \times S_{MO}$;

e) fournir simultanément un signal de copie d'efférence avec la représentation de paramètre $V_M$ audit réseau d'entrée, ledit réseau d'entrée comportant une première matrice de pondération $S_{MI}$ correspondant aux pondérations des interconnexions des premiers neurones du réseau d'entrée pour générer un premier signal d'entrée avec la représentation de paramètre $V_M \times S_{MI}$ et fournir ledit premier signal d'entrée au réseau interne;

f) changer les valeurs de la matrice de pondération $S_{IM}$ et de la première matrice de pondération $S_{MI}$ pendant une phase d'apprentissage de façon à apprendre à partir de l'environnement.

caractérisé par les étapes consistant à :

g) fournir aussi audit réseau d'entrée le signal de sortie avec la représentation de paramètre $V_O = V_M \times S_{MO}$, ledit réseau d'entrée comportant à cet effet une deuxième matrice de pondération $E_{OI}$ correspondant aux pondérations des interconnexions des deuxièmes neurones du réseau d'entrée pour générer un deuxième signal d'entrée avec la représentation de paramètre $V_O \times E_{OI}$ pour le réseau interne qui représente le résultat de l'influence du signal de sortie du réseau de sortie sur l'environnement;

h) corriger dans ledit réseau d'entrée le premier signal d'entrée avec la représentation de paramètre $V_M \times S_{MI}$ par le deuxième signal d'entrée avec la représentation de paramètre $V_O \times E_{OI}$ de façon à créer le signal d'entrée avec la représentation de paramètre $V_I$;

i) fournir audit réseau interne ledit signal d'entrée avec la représentation de paramètre $V_I$ pour générer un signal d'efférence avec la représentation de paramètre $V_M = V_I \times S_{IM}$.

2. Procédé selon la revendication 1, caractérisé en ce que la correction est effectuée par une addition.

3. Procédé selon la revendication 1 ou 2, caractérisé en ce que seule la représentation de paramètre du signal provenant du réseau interne est réinjectée dans le traitement de signaux dans le réseau neuronal après l'apprentissage.

4. Réseau neuronal pour traiter des signaux de flux de données comprenant :

a) un réseau d'entrée de neurones d'entrée formant un capteur externe (2) pour recevoir un signal d'afférence provenant de l'environnement et pour générer un signal d'entrée avec la représentation de paramètre $V_I$;

b) des moyens d'activation internes (3) pour créer un signal d'activité initial;

c) un réseau interne de neurones internes formant un noeud principal (1) et comportant une matrice de pondération $S_{IM}$ correspondant aux pondérations des interconnexions des neurones du réseau interne pour recevoir ledit signal d'activité initial et, en réponse à celui-ci, pour générer un signal d'efférence avec la représentation de paramètre $V_M$;

d) un réseau de sortie de neurones de sortie formant un effecteur externe (5) et comportant une matrice de pondération $S_{MO}$ correspondant aux pondérations appliquées aux interconnexions des neurones du réseau de sortie pour recevoir ledit signal d'efférence avec la représentation de paramètre $V_M$ et pour générer un signal de sortie avec la représentation de paramètre $V_O = V_M \times S_{MO}$;

e) des moyens pour fournir simultanément un signal de copie d'efférence avec la représentation de paramètre $V_M$ audit réseau d'entrée, ledit réseau d'entrée comportant une première matrice de pondération $S_{MI}$ correspondant aux pondérations des interconnexions des premiers neurones du réseau d'entrée pour générer un premier signal d'entrée avec la représentation de paramètre $V_M \times S_{MI}$ et fournir ledit premier signal d'entrée au réseau interne;

f) des moyens pour changer les valeurs de la matrice de pondération $S_{IM}$ et de la première matrice de pondération $S_{MI}$ pendant une phase d'apprentissage de façon à apprendre à partir de l'environnement.

le réseau étant caractérisé par :

g) des moyens pour fournir le signal de sortie avec la représentation de paramètre $V_O = V_M \times S_{MO}$, audit réseau d'entrée qui comporte à cet effet une deuxième matrice de pondération $E_{OI}$ correspondant aux pondérations des interconnexions des deuxièmes neurones du réseau d'entrée pour générer un deuxième signal d'entrée avec la représentation de paramètre $V_O \times E_{OI}$ pour le réseau interne, ledit deuxième signal d'entrée représentant le résultat de l'influence du signal de sortie du réseau de sortie sur l'environnement;

h) des moyens dans ledit réseau d'entrée pour corriger le premier signal d'entrée avec la représentation de paramètre $V_M \times S_{MI}$ par le deuxième signal d'entrée avec la représentation de paramètre $V_O \times E_{OI}$ de façon à créer le signal d'entrée avec la représentation de paramètre $V_I$;

i) dans lequel ledit réseau interne reçoit ledit signal d'entrée avec la représentation de paramètre $V_I$ pour générer un signal d'efférence avec la représentation de paramètre $V_M = V_I \times S_{IM}$.

5. Réseau neuronal selon la revendication 4, caractérisé en ce que la correction consiste en une addition.

6. Réseau neuronal selon la revendication 4 ou 5, caractérisé en ce que le noeud principal comporte en plus une entrée pour recevoir des signaux de sortie provenant d'un activateur interne dont l'entrée est connectée aux sorties d'une unité de capteur qui reçoit des signaux représentant des déviations par rapport aux états optimaux du réseau neuronal et des signaux provenant de la sortie du capteur externe.

7. Réseau neuronal selon les revendications 4-6, caractérisé en ce que l'activateur interne comporte une sortie qui est connectée à l'entrée d'un sélecteur et activateur qui comporte une sortie connectée au noeud principal.

Afference Input

Reafference
Input $E_{OI}$

Efference
Copy $S_{MI}$

MASTER
NODE
NEURONS

INPUT NEURONS

$V_I$

$V_M$

Efference

$V_O$

$S_{MO}$

OUTPUT
NEURONS

# FIG. 1

**FIG. 2**

FIG. 3

FIG. 4

FIG. 5

FIG. 6

FIG. 7

**FIG. 8**